(19) Europäisches Patentamt
European Patent Office
Office européen des brevets

(11) Veröffentlichungsnummer: **0 044 474**
**A2**

(12) # EUROPÄISCHE PATENTANMELDUNG

(21) Anmeldenummer: 81105346.1

(22) Anmeldetag: 09.07.81

(51) Int. Cl.$^3$: C 09 B 67/20
C 09 D 17/00, C 09 D 11/02

(30) Priorität: 21.07.80 DE 3027595

(43) Veröffentlichungstag der Anmeldung: 27.01.82 Patentblatt 82/4

(84) Benannte Vertragsstaaten: CH DE FR GB LI

(71) Anmelder: BAYER AG
Zentralbereich Patente, Marken und Lizenzen
D-5090 Leverkusen 1, Bayerwerk(DE)

(72) Erfinder: Wolf, Karlheinz, Dr.
Paul-Klee-Strasse 77
D-5090 Leverkusen 1(DE)

(72) Erfinder: Bremer, Fritz, Dr.
Paul-Klee-Strasse 64
D-5090 Leverkusen 1(DE)

(72) Erfinder: Haus, Artur, Dr.
Zum Eschental 8
D-5063 Overath(DE)

(72) Erfinder: Hörnle, Reinhold, Dr.
Hufelandstrasse 42
D-5000 Köln 80(DE)

(54) **Pigmentpräparationen, Verfahren zu ihrer Herstellung sowie ihre Verwendung.**

(57) Pigmentpräparationen enthaltend ein Pigment-Amin-Präparat und einen aliphatischen Alkohol mit 6 bis 22 C-Atomen. Verfahren zu ihrer Herstellung sowie ihre Verwendung zur Herstellung von Lacken und Druckfarben.

EP 0 044 474 A2

Croydon Printing Company Ltd.

BAYER AKTIENGESELLSCHAFT
Zentralbereich
Patente, Marken und Lizenzen

5090 Leverkusen, Bayerwerk
PG/bc/c

## Pigmentpräparationen, Verfahren zu ihrer Herstellung sowie ihre Verwendung

Die Erfindung betrifft Pigmentpräparationen, enthaltend ein Pigment-Amin-Präparat und einen aliphatischen Alkohol mit 6 bis 22 C-Atomen.

Bevorzugt enthält der Alkohol 12 bis 22 C-Atome.

Als Beispiele für solche Alkohole seien genannt: Cetylalkohol, Oleylalkohol, Behenylalkohol, Laurylalkohol, Stearylalkohol.

Bevorzugt eingesetzt wird Stearylalkohol.

Die Pigmentpräparationen enthalten z.B. Azo-, Metallkomplex-, Anthrachinon-, Phthalocyanin- und Anilinschwarzpigmente; weiterhin polycyclische und heterocyclische Pigmente, z.B. solche der Anthanthron-, Pyranthron-, Isoviolanthron-, Flavanthron-, Naphthalintetracarbonsäure-, Perylentetracarbonsäure-, Naphthaldazin-, Indanthrenblau-, Naphthazin-, Dioxazin-, Thioindigo-,

Chinacridon-, Isoindolinqn-Reihe; weiterhin Ruß und anorganische Pigmente wie Zinksulfide, Cadmiumsulfide oder -selenide, Ultramarin, Titandioxid, Eisenoxide, Nickel- oder Chromtitangelb, Chromoxide oder Chromatpigmente.

Bevorzugt eingesetzt werden Azopigmente vom Monoazoarylamid-Typ wie Pigmente der Formel

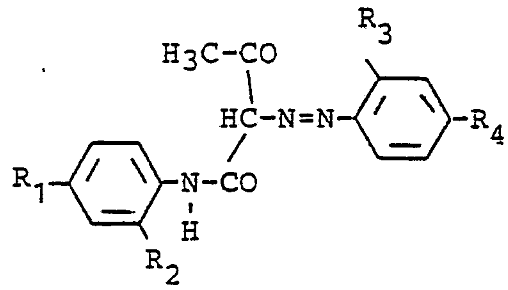

worin

$R_1$ Wasserstoff, Methyl, Chlor,
$R_2$ Wasserstoff, Methyl, Chlor, Methoxy,
$R_3$ Nitro, Methoxy und
$R_4$ Wasserstoff, Methyl, Chlor, Methoxy, Nitro

bezeichnen.

Beispielhaft seien genannt: C.I. Pigment Yellow 1, C.I. Pigment Yellow 3, C.I. Pigment Yellow 5, C.I. Pigment Yellow 2, C.I. Pigment Orange 1, C.I. Pigment Yellow 74, C.I. Pigment Yellow 98.

Besonders bevorzugt eingesetzt werden Azopigmente vom Benzidingelb-Typ wie die Gelbpigmente die durch Kupplung von tetrazotiertem 3,3'-Dichlor-4,4'-diaminodiphenyl auf Acetessigsäureanilide der Formel

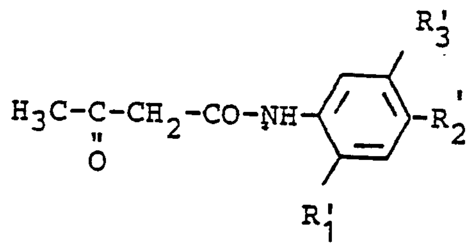

in der

$R_1'$ Wasserstoff, Methyl, Methoxy,
$R_2'$ Wasserstoff, Methyl, Chlor und
$R_3'$ Wasserstoff, Methoxy

bezeichnen oder auf Gemische der Kupplungskomponenten erhalten werden.

Beispielhaft seien genannt: C.I. Pigment Yellow 13, C.I. Pigment Yellow 14, C.I. Pigment Yellow 17, C.I. Pigment Yellow 83.

Von besonderem Interesse im Rahmen dieser Erfindung ist C.I. Pigment Yellow 12.

Die Pigmente werden im Gemisch mit Aminen in die neuen Präparationen eingesetzt. Solche Pigment-Amin-Präparate sind z.B. aus Patton, C. (Hrg.): Pigment Handbook, Vol. III (1973), S. 161-162, bekannt. Beispielhaft seien genannt:

a) Aliphatische Monoamine, die einen Alkylrest mit 10 bis 20 C-Atomen besitzen, z.B. Laurylamin, Stearylamin, Oleylamin, Talgamin, Kokosamin;

b) aliphatische Diamine, die eine kurzkettige Alkylengruppe und einen $C_{10}$-$C_{20}$-N-Alkylrest aufweisen wie N-Stearyl-trimethylendiamin, N-Talg-trimethylendiamin, N-Kokostrimethylendiamin;

c) aliphatische Triamine, die zwei kurzkettige Alkylengruppen und einen $C_{10}$-$C_{20}$-N-Alkylrest aufweisen wie N-Stearyl-N'-aminopropyltrimethylendiamin, N-Kokos-N'-aminopropyltrimethylendiamin;

d) Cycloaliphatische Amine der Formel

R-NH-R'

in der
R einen 5- oder 6-gliedrigen, gegebenenfalls substituierten cycloaliphatischen Rest und
R' Wasserstoff, einen 5- oder 6-gliedrigen, gegebenenfalls substituierten cycloaliphatischen Rest oder einen $C_2$-$C_4$-Alkylrest, der durch $-NH_2$ substituiert sein kann, bezeichnen wie Cyclohexylamin, N-Cyclohexylpropylendiamin-1,3 und N-Cyclohexyltrimethylendiamin;

e) Harzamine wie Abietylamin, N-Abietyltrimethylendiamin und Dehydroabietylamin.

Die Amin-Pigmentpräparate können weiterhin Alkylpolyethylenoxyamine, Aminoxide oder Phosphinoxide enthalten. Die Herstellung der erfindungsgemäß einsetzbaren Amin-Pigmentpräparate ist z.B. aus folgenden Patentschriften bekannt: GB-PS 1 080 115, FR-PS 1 491 740, CH-PS 459 426, FR-PS 1 538 270, US-PS 3 120 508.

Bevorzugt eingesetzt werden die unter d) genannten cycloaliphatischen Amine, insbesondere N-Cyclohexylpropylendiamin-1,3.

Eine besonders bevorzugte Ausführungsform der vorliegenden Erfindung sind Pigmentpräparationen, die ein Azopigment vom Benzidingelb-Typ, insbesondere C.I. Pigment Yellow 12, N-Cyclohexylpropylendiamin-1,3 und Stearylalkohol, enthalten.

Neben den genannten Komponenten können die neuen Pigmentpräparationen weitere Zusatzstoffe wie übliche Verschnittmittel, beispielsweise anorganische Füllstoffe wie Kreide, Kaolin, Bariumsulfat, Talk und weiterhin Verdünnungsmittel wie Polysaccharide, z.B. Dextrin, Zucker und Stärke enthalten.

Außerdem hat sich in einigen Fällen ein Zusatz von Verbindungen der Formel

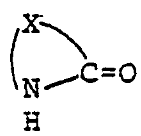

in der

X für die restlichen Glieder eines 5- bis 9-gliedrigen Ringes steht, der neben C-Atomen 1, 2 oder 3 N-Atome enthält und beispielsweise durch $C_1$-$C_4$-Alkyl, -COOH, $-NH_2$, Oxo und -OH substituiert sein kann, bewährt.

Beispiele für diese Verbindungen sind ζ-Önantholactam und dessen Derivate, 2,5-Diketopiperazin, Barbitursäure, Pyrrolidon-2 und dessen Derivate wie 3,3-Dimethylpyrrolidon-2, Piperidon-2 und dessen Derivate und insbesondere ε-Caprolactam und dessen Derivate wie γ-Methyl-ε-caprolactam und ε-Methyl-ε-caprolactam.

Die erfindungsgemäßen Pigmentpräparationen enthalten vorzugsweise 30 bis 95 Gew.-% Pigment-Amin-Präparat, 5 bis 60 Gew.-% mindestens eines aliphatischen Alkohols mit 6 bis 22 C-Atomen und 0 bis 60 Gew.-% weitere Zusatzstoffe. Besonders bevorzugt enthalten die Präparationen 40 bis 80 Gew.-% Pigment-Amin-Präparat, 10 bis 30 Gew.-% mindestens eines aliphatischen Alkohols mit 6 bis 22 C-Atomen und 0 bis 40 Gew.-% weitere Zusatzstoffe.

Die erfindungsgemäß einsetzbaren Pigment-Amin-Präparate werden vorzugsweise durch Behandlung von 1 Gew.-Teil Pigment mit 0.5 bis 0.05 Gew.-Teilen Amin erhalten.

Zur Herstellung der neuen Pigmentpräparationen werden die Amin-Pigment-Präparate mit aliphatischen Alkoholen mit 6 bis 22 C-Atomen und gegebenenfalls weiteren Zusatzstoffen trocken gemischt und gemahlen oder es werden die gemahlenen Komponenten gemischt.

Die Mahlung kann z.B. in einem Mischer, einer Kugelmühle, Stiftscheibenmühle, Hammermühle oder in einer Luftstrahlmühle erfolgen. Eine andere Möglichkeit der Herstellung besteht darin, daß man eine Dispersion, vorzugsweise eine wäßrige Dispersion, trocknet und anschließend gegebenenfalls zu einem Pulver mahlt. Die Trocknung kann z.B. in einem Umluftschrank, mit Schaufeltrockner, Walzentrockner oder durch Sprühtrocknung erfolgen.

Die neuen Präparationen haben den Vorteil, daß sich mit ihnen niedrigviskose Lacke und insbesondere Druckfarben herstellen lassen. Niedrigviskose Druckfarben sind bei der Herstellung, bei der Handhabung und bei der Verarbeitung, z.B. mit schnellaufenden Druckmaschinen von großem Vorteil. Die Vorzüge der neuen Präparationen zeigen sich insbesondere in Druckfarben auf Basis Toluol.

Beispiel 1

a) Herstellung der Präparation

Der wasserhaltige Preßkuchen von Pigment Yellow 12 (Colour Index, Teil II, Nr. 21 090) mit einem Pigmentgehalt von 22 %, wird in einem Schaufeltrockner unter Zusatz von 20 Gew.-% (bezogen auf trockenes Pigment) N-Cyclohexylpropylendiamin-1,3, getrocknet. Anschließend werden 80 g dieser Formierung mit 20 g Stearylalkohol gemahlen und gemischt. Man erhält eine Pigmentpräparation mit der man im Vergleich zu dem aminbehandelten Pigment ohne Stearylalkohol wesentlich niedriger viskose Druckfarben herstellen kann.

b) Herstellung der Druckfarben

Zur Herstellung der Druckfarben wurden 25 g der Präparation mit 40 g Toluol, 35 g Lack (Herstellung s. unter c)) und 150 g Glaskugeln (Ø 2 mm) 30 Minuten auf einem Schüttelgerät, Typ Red Devil, geschüttelt. Man erhält nach Abtrennung der Perlen eine gut fließfähige Druckfarbe, die weiter verdünnt werden kann.

c) Herstellung des Lackes

13 g Albertol KP 670 (Kolophonium-modifiziertes Phenolharz der Firma Reichholdt-Albert-Chemie AG, Frankfurt) und 13 g Erkazit 899 (überhartes Kalkharzsystem der Firma Lackharzwerke Robert Krämer, Bremen) werden in 34 g Toluol gelöst.

Beispiel 2

Wie in Beispiel 1 wird eine Pigmentpräparation aus 50 g aminbelegtem C.I. Pigment Yellow 12 aus Beispiel 1, 20 g Stearylalkohol und 30 g Kreide (Millicarb der Firma Omya) hergestellt.

Beispiel 3

Wie in Beispiel 1 oder 2 wird die Mischung mit einem C.I. Pigment Yellow 12, das mit N-Kokosalkyltrimethylendiamin entsprechend Beispiel 1 der DOS 2 535 070 belegt wurde, hergestellt.

Beispiel 4

1000 g wasserhaltiger Preßkuchen von Pigment Yellow 12 (Colour Index Teil II, Nr. 21 090) mit einem Pigmentgehalt von 22 % wird in einem Schaufeltrockner mit 44 g N-Cyclohexylpropylendiamin-1,3, 98 g Stearylalkohol und 147 g Kreide (Millicarb der Firma Omya) getrocknet.

Beispiel 5

Wie in Beispiel 4 wird eine Mischung aus 1000 g 22 %igem Preßkuchen von C.I. Pigment Yellow 12, 44 g N-Cyclohexylpropylendiamin-1,3 und 61 g Stearylalkohol in einem Schaufeltrockner getrocknet.

Beispiel 6

In Beispiel 2 und 4 wird statt Kreide Kaolin eingesetzt.

Beispiel 7

In Beispiel 2 und 4 wird statt Kreide $BaSO_4$ eingesetzt.

Beispiel 8

Gleich gute Ergebnisse erhält man, wenn man in den Beispielen 1 bis 7 statt Stearylalkohol Cetylalkohol oder Laurylalkohol einsetzt.

Patentansprüche

1) Pigmentpräparationen enthaltend ein Pigment-Amin-Präparat und einen aliphatischen Alkohol mit 6 bis 22 C-Atomen.

2) Pigmentpräparationen gemäß Anspruch 1, enthaltend Stearylalkohol.

3) Pigmentpräparationen gemäß den Ansprüchen 1 und 2, enthaltend ein Azopigment vom Benzidingelb-Typ.

4) Pigmentpräparationen gemäß den Ansprüchen 1 bis 3, enthaltend N-Cyclohexylpropylendiamin-1,3.

5) Pigmentpräparationen gemäß den Ansprüchen 1 bis 4, enthaltend 30 bis 95 Gew.-% Pigment-Amin-Präparat, 5 bis 60 Gew.-% mindestens eines aliphatischen Alkohols mit 6 bis 22 C-Atomen und 0 bis 60 Gew.-% weitere Zusatzstoffe.

6) Pigmentpräparationen gemäß den Ansprüchen 1 bis 4, enthaltend 40 bis 80 Gew.-% Pigment-Amin-Präparat, 10 bis 30 Gew.-% mindestens eines aliphatischen Alkohols mit 6 bis 22 C-Atomen und 0 bis 40 Gew.-% weitere Zusatzstoffe.

7) Verfahren zur Herstellung von Pigmentpräparationen gemäß den Ansprüchen 1 bis 6, dadurch gekennzeichnet, daß man Pigment-Amin-Präparate mit aliphatischen Alkoholen mit 6 bis 22 C-Atomen und gegebenenfalls weiteren Zusatzstoffen trocken mischt und gegebenenfalls mahlt oder eine Dispersion der Komponenten trocknet und gegebenenfalls mahlt.

8) Verwendung von Pigmentpräparationen gemäß den Ansprüchen 1 bis 6 zur Herstellung von Lacken und Druckfarben.